(19) Europäisches Patentamt
European Patent Office
Office européen des brevets

(11) **EP 2 648 032 A1**

(12) **DEMANDE DE BREVET EUROPEEN**

(43) Date de publication:
**09.10.2013 Bulletin 2013/41**

(51) Int Cl.:
*G02C 7/06* *(2006.01)*     *G02C 7/02* *(2006.01)*

(21) Numéro de dépôt: **12305395.1**

(22) Date de dépôt: **02.04.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeurs:
• **Essilor Canada Ltee**
**Saint Laurent, Quebec QC H4N 1W2 (CA)**
• **Université de Montréal**
**Montreal, QC H3T 1J4 (CA)**

(72) Inventeurs:
• **Faubert, Jocelyn**
**MONTREAL, Québec H3T 1B8 (CA)**
• **Giraudet, Guillaume**
**MONTREAL, Québec H4R 0B8 (CA)**

(74) Mandataire: **Cabinet Plasseraud**
**52, rue de la Victoire**
**75440 Paris Cedex 09 (FR)**

(54) **Surface ophtalmique progressive**

(57)     Surface ophtalmique progressive comprenant une méridienne principale de progression divisant la surface en une partie nasale et une partie temporale et passant par au moins un point de contrôle Py d'ordonnée Y dans un repère centré en un point de référence O(0 ;0), caractérisée en ce que pour les points situés à une ordonnée Y de part et d'autre dudit point PY:

$$0{,}5 \geq \left| \frac{MaxgradCyl_{Ny1} \;-\; MaxgradCyl_{Ty1}}{MaxgradCyl_{Ny1} \;+\; MaxgradCyl_{Ty1}} \right| \;\geq\; 0{,}2$$

avec:
MaxgradCylNyl la valeur absolue du gradient maximal de cylindre des points situés à ladite ordonnée Y dans la partie nasale de la surface et,
MaxgradCylTyl la valeur absolue du gradient maximal de cylindre des points situés à ladite ordonnée Y dans la partie temporale de la surface.

FIG. 1

**EP 2 648 032 A1**

**Description**

La présente invention concerne une surface ophtalmique progressive, une paire de surface ophtalmique progressive et un procédé de détermination d'une telle paire.

Les verres progressifs («Progressive Power Lens» en anglais) sont utilisés depuis longtemps pour corriger une amétropie d'un porteur d'une façon qui est adaptée à la fois pour la vision de loin et pour la vision de près. Pour cela, le verre présente des valeurs de puissance optique qui sont variables le long d'une ligne méridienne, entre une direction de référence pour la vision de loin et une direction de référence pour la vision de près.

Les valeurs de la puissance optique pour ces deux directions de référence sont déterminées à partir d'une prescription qui est établie pour le porteur. De façon usuelle, la prescription indique une valeur de la puissance optique pour la vision de loin et une valeur d'addition. La valeur de la puissance optique du verre qui convient au porteur pour corriger sa vue en condition de vision de près est égale à la somme de la valeur de puissance optique qui est prescrite pour la vision de loin et de la valeur d'addition prescrite. Le verre qui est fourni au porteur est réalisé pour produire sensiblement la valeur de la puissance optique qui est ainsi calculée pour la vision de près et la valeur de la puissance optique qui est prescrite pour la vision de loin, respectivement pour les deux directions de référence pour la vision de près et pour la vision de loin.

Il a été proposé d'adapter la répartition de l'astigmatisme involontaire en fonction de la propension du porteur à tourner horizontalement plutôt la tête ou les yeux lorsqu'il regarde successivement dans deux directions distinctes, situées à une même hauteur. Une telle adaptation du design du verre progressif permet de réduire la gêne qui est causée par l'astigmatisme involontaire au porteur. Il s'agit donc d'une personnalisation du verre progressif en fonction du porteur, qui s'ajoute à la concordance du verre avec la prescription optique qui est établie pour le porteur.

Il est aussi connu d'adapter un verre progressif en fonction des mouvements verticaux de la tête du porteur. Il s'agit d'une autre personnalisation du verre progressif, qui est différente de la précédente et est basée sur les mouvements de tête horizontaux. Une telle personnalisation, qui prend en compte les changements d'inclinaison de la tête dans un plan vertical, a pour but d'ajuster la variation de la puissance optique du verre progressif le long de la ligne méridienne. De cette façon, la puissance optique est adaptée à l'éloignement d'un objet regardé quelle que soit la hauteur angulaire de la direction dans laquelle se trouve l'objet devant le porteur. Dans ce but, le document EP 1 591 064 par exemple, propose un dispositif qui permet de déterminer les variations d'inclinaison de la tête du porteur lorsqu'il regarde alternativement dans la direction de référence pour la vision de loin et celle pour la vision de près.

Mais, les méthodes de personnalisation d'un verre progressif qui ont été proposées avant la présente invention, pour prendre en compte les mouvements de la tête du porteur, sont réalisées en supposant que les porteurs ont une coordination oeil- tête symétrique.

Autrement dit, il a toujours été supposé que la propension d'un individu à bouger la tête ou les yeux lorsqu'il regarde successivement dans deux directions distinctes est la même que la deuxième direction soit sur le côté gauche ou sur le côté droit de la direction de référence.

Or, les inventeurs ont constaté que certains individus peuvent avoir une coordination oeil- tête asymétrique.

Les verres progressifs actuels présentent des surfaces qui sont les plus symétriques possibles autour de la méridienne.

Ainsi, les verres progressifs actuels ne prennent pas en compte une asymétrie dans la propension d'un individu à bouger la tête ou les yeux pour regarder un objet.

Il existe donc un besoin pour des surfaces ophtalmiques progressives qui permettent de tenir compte de ces asymétries.

L'objet de l'invention est de fournir une surface ophtalmique progressive permettant de tenir compte de l'asymétrie des besoins du porteur.

Pour cela, l'invention propose une surface ophtalmique progressive comprenant une méridienne principale de progression divisant la surface en une partie nasale et une partie temporale et passant par au moins un point de contrôle $P_y$ d'ordonnée Y dans un repère centré en un point de référence O(0 ;0), dans laquelle pour les points situés à une ordonnée Y de part et d'autre dudit point $P_Y$:

$$0,5 \geq \left| \frac{MaxgradCyl_{Ny1} - MaxgradCyl_{Ty1}}{MaxgradCyl_{Ny1} + MaxgradCyl_{Ty1}} \right| \geq 0,2$$

avec:

$MaxgradCyl_{Ny1}$ la valeur absolue du gradient maximal de cylindre des points situés à ladite ordonnée Y dans la partie nasale de la surface et,

MaxgradCyl$_{Ty1}$ la valeur absolue du gradient maximal de cylindre des points situés à ladite ordonnée Y dans la partie temporale de la surface.

Avantageusement, la surface ophtalmique progressive selon l'invention présente une dissymétrie dans la répartition des gradients de cylindre entre la partie nasale et la partie temporale. Cette dissymétrie permet de tenir compte d'une dissymétrie dans le comportement du porteur dans sa propension à bouger la tête ou les yeux pour regarder un objet.

Une surface selon l'invention peut en outre comprendre une ou plusieurs des caractéristiques optionnelles ci-dessous, considérées individuellement selon toutes les combinaisons possibles :

- pour les points situés à une ordonnée Y de part et d'autre dudit point P$_Y$, la relation ci-dessous est vérifiée

$$0,4 \geq \left| \frac{MaxgradCyl_{Ny1} - MaxgradCyl_{Ty1}}{MaxgradCyl_{Ny1} + MaxgradCyl_{Ty1}} \right|$$

- pour les points situés à une ordonnée Y de part et d'autre dudit point P$_Y$, la relation ci-dessous est vérifiée

$$0,35 \geq \left| \frac{MaxgradCyl_{Ny1} - MaxgradCyl_{Ty1}}{MaxgradCyl_{Ny1} + MaxgradCyl_{Ty1}} \right|$$

- pour les points situés à une ordonnée Y de part et d'autre dudit point P$_Y$, la relation ci-dessous est vérifiée

$$\left| \frac{MaxgradCyl_{Ny1} - MaxgradCyl_{Ty1}}{MaxgradCyl_{Ny1} + MaxgradCyl_{Ty1}} \right| \geq 0,25$$

- la surface comprend une zone de vision destinée à la vision de loin, ledit point de contrôle P$_Y$ étant un point de contrôle de la vision de loin ;
- la surface comprend une zone de vision destinée à la vision de près, ledit point de contrôle P$_Y$ étant un point de contrôle de la vision de près ;
- pour les points situés à une ordonnée Y de part et d'autre dudit point P$_Y$, la relation ci-dessous est vérifiée

$$0,5 \geq \left| \frac{MaxgradSph_{Ny1} - MaxgradSph_{Ty1}}{MaxgradSph_{Ny1} + MaxgradSph_{Ty1}} \right| \geq 0,2$$

avec:

MaxgradSph$_{Ny1}$ étant la valeur absolue du gradient maximal de sphère des points situés à ladite ordonnée Y dans la partie nasale de la surface et,

MaxgradSph$_{Ty1}$ étant la valeur absolue du gradient maximal de sphère des points situés à ladite ordonnée Y dans la partie temporale de la surface ;

- pour les points situés à une ordonnée Y de part et d'autre dudit point P$_Y$, la relation ci-dessous est vérifiée

$$0,4 \geq \left| \frac{MaxgradSph_{Ny1} - MaxgradSph_{Ty1}}{MaxgradSph_{Ny1} + MaxgradSph_{Ty1}} \right| \qquad ;$$

- pour les points situés à une ordonnée Y de part et d'autre dudit point $P_Y$, la relation ci-dessous est vérifiée

$$0,35 \geq \left| \frac{MaxgradSph_{Ny1} - MaxgradSph_{Ty1}}{MaxgradSph_{Ny1} + MaxgradSph_{Ty1}} \right| \qquad ;$$

- pour les points situés à une ordonnée Y de part et d'autre dudit point $P_Y$, la relation ci-dessous est vérifiée

$$\left| \frac{MaxgradSph_{Ny1} - MaxgradSph_{Ty1}}{MaxgradSph_{Ny1} + MaxgradSph_{Ty1}} \right| \geq 0,25 \quad ;$$

et
- les points d'ordonnée Y sont compris à l'intérieur d'un disque de diamètre 50 mm centré sur le point de référence O.

L'invention se rapporte également à une paire de surfaces progressives comprenant une première surface destinée à un oeil droit d'un porteur et une seconde surface destinée à un oeil gauche d'un porteur, les premières et deuxièmes surfaces étant selon l'invention et pour les points situés à une ordonnée Y de part et d'autre du point $P_Y$ de chacune des surfaces progressives :

$$\left| \frac{MaxgradCyl_{Ny1} - MaxgradCyl_{Ty2}}{MaxgradCyl_{Ny1} + MaxgradCyl_{Ty2}} \right| \leq 0,1$$

et,

$$\left| \frac{MaxgradCyl_{Ny2} - MaxgradCyl_{Ty1}}{MaxgradCyl_{Ny2} + MaxgradCyl_{Ty1}} \right| \leq 0,1$$

avec

- $MaxgradCyl_{Ny1}$ étant la valeur absolue du gradient maximal de cylindre des points situés à ladite ordonnée Y dans la partie nasale de la première surface,
- $MaxgradCyl_{Ty1}$ étant la valeur absolue du gradient maximal de cylindre des points situés à ladite ordonnée Y dans la partie temporale de la première surface,
- $MaxgradCyl_{Ny2}$ étant la valeur absolue du gradient maximal de cylindre des points situés à ladite ordonnée Y dans la partie nasale de la seconde surface et,
- $MaxgradCyl_{Ty2}$ étant la valeur absolue du gradient maximal de cylindre des points situés à ladite ordonnée Y dans la partie temporale de la seconde surface.

Selon un mode de réalisation de l'invention, pour les points situés à une ordonnée Y de part et d'autre du point $P_Y$ de chacune des surfaces progressives , les relations ci-dessous sont vérifiées

$$\frac{\left|\,MaxgradCyl_{Ny1} \;-\; MaxgradCyl_{Ty2}\,\right|}{\left|\,MaxgradCyl_{Ny1} \;+\; MaxgradCyl_{Ty2}\,\right|} \;\leq\; 0,075$$

et,

$$\frac{\left|\,MaxgradCyl_{Ny2} \;-\; MaxgradCyl_{Ty1}\,\right|}{\left|\,MaxgradCyl_{Ny2} \;+\; MaxgradCyl_{Ty1}\,\right|} \;\leq\; 0,075\,.$$

Selon un mode de réalisation de l'invention, pour les points situés à une ordonnée Y de part et d'autre du point $P_Y$ de chacune des surfaces progressives , les relations ci-dessous sont vérifiées :

$$\frac{\left|\,MaxgradCyl_{Ny1} \;-\; MaxgradCyl_{Ty2}\,\right|}{\left|\,MaxgradCyl_{Ny1} \;+\; MaxgradCyl_{Ty2}\,\right|} \;\leq\; 0,05$$

et,

$$\frac{\left|\,MaxgradCyl_{Ny2} \;-\; MaxgradCyl_{Ty1}\,\right|}{\left|\,MaxgradCyl_{Ny2} \;+\; MaxgradCyl_{Ty1}\,\right|} \;\leq\; 0,05\,.$$

Selon un mode de réalisation, la paire de surface progressive selon l'invention peut également comprendre , pour laquelle pour les points situés à une ordonnée Y de part et d'autre dudit point $P_Y$, les relations ci-dessous sont vérifiées :

$$\frac{\left|\,MaxgradSph_{Ny1} \;-\; MaxgradSph_{Ty2}\,\right|}{\left|\,MaxgradSph_{Ny1} \;+\; MaxgradSph_{Ty2}\,\right|} \;\leq\; 0,1$$

$$\frac{\left|\,MaxgradSph_{Ny2} \;-\; MaxgradSph_{Ty1}\,\right|}{\left|\,MaxgradSph_{Ny2} \;+\; MaxgradSph_{Ty1}\,\right|} \;\leq\; 0,1$$

avec

- $MaxgradSph_{Ny1}$ étant la valeur de absolue du gradient maximum de sphère des points situés à l'ordonnée Y dans la partie nasale de la première surface,
- $MaxgradSph_{Ty1}$ étant la valeur de absolue du gradient maximum de sphère des points situés à l'ordonnée Y dans la partie temporale de la première surface,
- $MaxgradSph_{Ny2}$ étant la valeur de absolue du gradient maximum de sphère des points situés à l'ordonnée Y dans la partie nasale de la second surface, et
- $MaxgradSph_{Ty2}$ étant la valeur de absolue du gradient maximum de sphère des points situés à l'ordonnée Y dans la partie temporale de la second surface.

Selon un mode de réalisation de l'invention, pour les points situés à une ordonnée Y de part et d'autre du point $P_Y$ de chacune des surfaces progressives , les relations ci-dessous sont vérifiées :

$$\left| \frac{MaxgradSph_{Ny1} - MaxgradSph_{Ty2}}{MaxgradSph_{Ny1} + MaxgradSph_{Ty2}} \right| \leq 0{,}075,$$

et

$$\left| \frac{MaxgradSph_{Ny2} - MaxgradSph_{Ty1}}{MaxgradSph_{Ny2} + MaxgradSph_{Ty1}} \right| \leq 0{,}075.$$

Selon un mode de réalisation de l'invention, pour les points situés à une ordonnée Y de part et d'autre du point $P_Y$ de chacune des surfaces progressives , les relations ci-dessous sont vérifiées :

$$\left| \frac{MaxgradSph_{Ny1} - MaxgradSph_{Ty2}}{MaxgradSph_{Ny1} + MaxgradSph_{Ty2}} \right| \leq 0{,}05,$$

et

$$\left| \frac{MaxgradSph_{Ny2} - MaxgradSph_{Ty1}}{MaxgradSph_{Ny2} + MaxgradSph_{Ty1}} \right| \leq 0{,}05.$$

L'invention se rapporte également à un procédé de détermination d'une paire de surfaces ophtalmiques progressives comprenant une première surface destinée à un oeil droit d'un porteur et une seconde surface destinée à un oeil gauche d'un porteur, le procédé comprenant :

-    une étape de fourniture de la prescription, au cours de laquelle la prescription d'un porteur est fournie,
-    une étape de fourniture des coefficients oeil-tête, au cours de la laquelle les coefficients oeil-tête droit et gauche du porteur sont fournis,
-    une étape de détermination d'une paire de surfaces ophtalmiques progressives, au cours de laquelle une paire de surfaces ophtalmiques progressives selon l'invention est déterminée en fonction de la prescription du porteur et les valeurs de

$$\left| \frac{MaxgradCyl_{Ny1} - MaxgradCyl_{Ty1}}{MaxgradCyl_{Ny1} + MaxgradCyl_{Ty1}} \right| \quad \text{et} \quad \left| \frac{MaxgradCyl_{Ny2} - MaxgradCyl_{Ty2}}{MaxgradCyl_{Ny2} + MaxgradCyl_{Ty2}} \right|$$

avec

MaxgradCyl$_{Ny1}$ et MaxgradCyl$_{Ny2}$ les valeurs absolues de gradient maximal de cylindre des points situés à ladite  ordonnée Y dans la partie nasale de la première et seconde surface respectivement et,
MaxgradCyl$_{Ty1}$ et MaxgradCyl$_{Ty2}$ les valeurs absolues du gradient maximal de cylindre des points situés à ladite ordonnée Y dans la partie temporale de la première et seconde surface respectivement,

sont déterminées en fonction des coefficients oeil-tête droit et gauche du porteur.

L'invention se rapporte également à un procédé de détermination d'une paire de surfaces ophtalmiques progressives comprenant une première surface destinée à un oeil droit d'un porteur et une seconde surface destinée à un oeil gauche d'un porteur, le procédé comprenant :

- une étape de fourniture de la prescription, au cours de laquelle la prescription d'un porteur est fournie,
- une étape de fourniture de l'empan, au cours de la laquelle l'empan perceptif du porteur est fourni,
- une étape de détermination d'une paire de surfaces ophtalmiques progressives, au cours de laquelle une paire de surfaces ophtalmiques progressives selon l'invention est déterminée en fonction de la prescription du porteur et les valeurs de

$$\left|\frac{MaxgradCyl_{Ny1} - MaxgradCyl_{Ty1}}{MaxgradCyl_{Ny1} + MaxgradCyl_{Ty1}}\right| \text{ et } \left|\frac{MaxgradCyl_{Ny2} - MaxgradCyl_{Ty2}}{MaxgradCyl_{Ny2} + MaxgradCyl_{Ty2}}\right|$$

avec

$MaxgradCyl_{Ny1}$ et $MaxgradCyl_{Ny2}$ les valeurs absolues de gradient maximal de cylindre des points situés à ladite ordonnée Y dans la partie nasale de la première et seconde surface respectivement et,
$MaxgradCyl_{Ty1}$, et $MaxgradCyl_{Ty2}$ les valeurs absolue du gradient maximal de cylindre des points situés à ladite ordonnée Y dans la partie temporale de la première et seconde surface respectivement,
sont déterminées en fonction de l'empan perceptif du porteur.

L'invention concerne également un procédé d'obtention d'un équipement ophtalmique comprenant une paire de lentilles progressives formant une lentille droite et une lentille gauche, le procédé comprenant l'utilisation de la paire de surfaces progressives selon l'invention pour la détermination de la fonction optique d'une lentille droite cible ainsi que pour la détermination de la fonction optique d'une lentille gauche cible.
L'invention se rapporte en outre à un équipement ophtalmique comprenant une paire de lentilles progressives obtenue selon l'invention.
L'invention a également pour objet un produit de programme d'ordinateur comprenant une série d'instructions qui lorsque chargée dans un ordinateur entraine l'exécution, par exemple par ledit ordinateur, des étapes d'un procédé selon l'invention.
L'invention sera mieux comprise à la lecture de la description qui va suivre, donnée uniquement à titre d'exemple et faite en référence aux dessins annexés dans lesquels :

- les figures 1 et 2 représentent un exemple de mesure d'un coefficient oeil-tête d'un porteur,
- la figure 3 représente les proportions de porteurs ayant un coefficient oeil-tête différent à gauche et à droite,
- les figures 4a et 4b représentent le gradient de cylindre en vision de loin respectivement d'un verre connu et d'un verre selon l'invention,
- les figures 5a et 5b représentent le gradient de sphère en vision de loin respectivement d'un verre connu et d'un verre selon l'invention,
- la figure 6 représente le gradient de cylindre en vision de loin d'une paire de verres selon l'invention,
- la figure 7 représente le gradient de sphère en vision de loin d'une paire de verres selon l'invention,
- les figures 8a et 8b représentent le gradient de cylindre en vision de près respectivement d'un verre connu et d'un verre selon l'invention,
- les figures 9a et 9b représentent le gradient de sphère en vision de près respectivement d'une paire de verres connue et d'une paire de verres selon l'invention,
- la figure 10 représente un procédé selon l'invention.

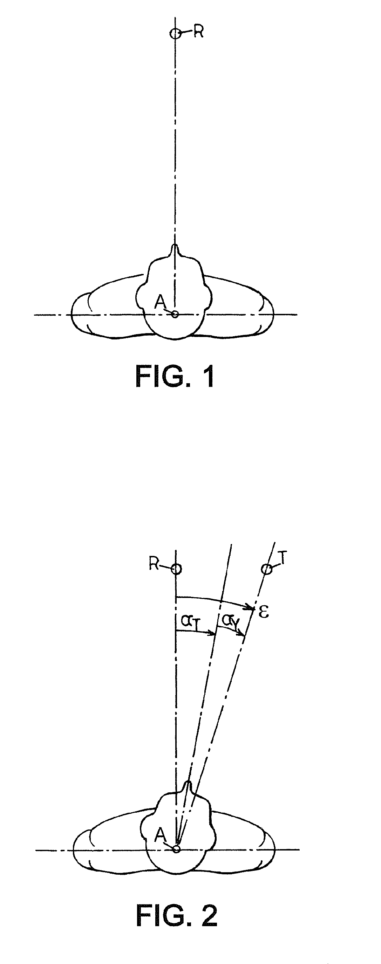

Pour des raisons de clarté, les différents éléments représentés sur les figures ne sont pas nécessairement à l'échelle.
Pour caractériser la propension d'un porteur de verres de lunettes ophtalmiques à bouger la tête ou les yeux pour suivre du regard une cible, on mesure les amplitudes relatives de mouvement des yeux et de la tête du porteur. Pour cela, on peut demander au porteur de regarder une première cible située dans le plan sagittal du porteur, dite cible de référence, en se plaçant face à celle-ci. On entend par plan sagittal d'un porteur le plan médian aux deux pupilles du porteur. La cible de référence est notée R sur la figure 1. Le porteur se place devant la cible de référence, avec les épaules sensiblement situées dans un plan vertical perpendiculaire à la ligne virtuelle qui relie sa tête à la cible de référence. Il a alors la tête et les yeux qui sont orientés en direction de la cible de référence.

A partir de cette situation, on demande au porteur de regarder une seconde cible dite cible de test et notée T, qui est décalée par rapport à la cible de référence, sans bouger les épaules. Pour ce faire, le porteur tourne pour partie la tête et pour partie les yeux (figure 2), de sorte que la direction de son regard passe de la cible de référence R à la cible de test T.

De préférence, la cible de test est décalée horizontalement par rapport à la cible de référence, de façon à caractériser les mouvements horizontaux de la tête et des yeux du porteur.

Le décalage angulaire de la cible de test par rapport à celle de référence est appelé excentricité, et noté E. On prend le centre A de la tête comme pôle de mesure des angles dans un plan horizontal qui contient ce pôle et les deux cibles R et T.

Sur la figure 2, $\alpha$T désigne l'angle de rotation de la tête du porteur, aussi appelé déviation angulaire de la tête, pour passer de la première situation d'observation de la cible de référence à la seconde situation d'observation de la cible de test. $\alpha$Y est l'angle de la rotation des yeux qui est effectuée simultanément par le porteur.

L'excentricité E est donc égale à la somme des deux angles $\alpha$T et $\alpha$Y.

On calcule alors le quotient de la déviation angulaire de la tête $\alpha$T par l'excentricité E.

Ce quotient est égal à l'unité pour un porteur qui a exclusivement tourné la tête pour passer de la cible de référence à la cible de test, et à zéro pour un porteur qui a tourné seulement les yeux.

On calcule ensuite un gain G pour ce test de coordination de mouvement "oeil/tête" qui a été effectué pour le porteur. Le gain G peut être défini par une fonction croissante prédéterminée du quotient de la déviation angulaire de la tête $\alpha$T par l'excentricité E.

Par exemple, le gain G peut être directement égal au quotient de $\alpha$T par E : G = $\alpha$T / E.

Un porteur qui tourne essentiellement les yeux pour fixer la cible de test a donc une valeur du gain G proche de zéro, et un porteur qui tourne essentiellement la tête pour fixer la même cible a une valeur de G proche de l'unité.

Ce type de détermination ne tient pas compte d'une éventuelle dissymétrie du porteur.

Pour la vision de loin, par exemple, les inventeurs ont observé la proportion du mouvement de la tête pour regarder une cible à 40 degrés peut être différente selon que la cible se trouve à droite ou à gauche du point de fixation central.

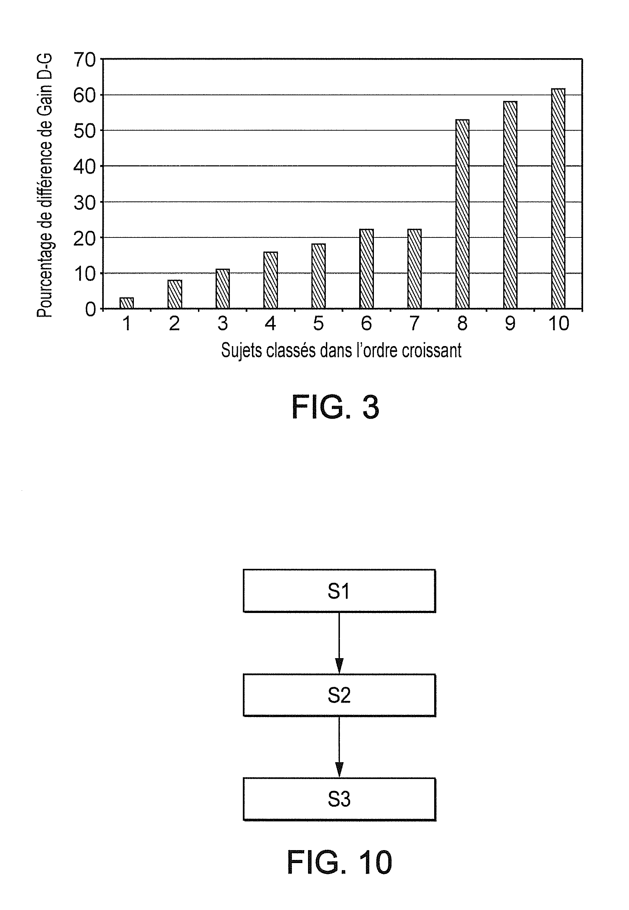

Cette symétrie/asymétrie droite-gauche est variable d'un individu à un autre, comme illustré dans le graphique en figure 3.

Le graphique en figure 3, regroupe des résultats de mesures effectuées par les inventeurs. Ces mesures ont été menées sur un groupe de 10 individus presbytes auxquels il a été demandé de regarder une cible test située à 40 degrés de part et d'autre de la cible de référence. Les inventeurs ont reportés sur le graphique en figure 3, les écarts de gain lorsque la cible test est située à gauche ou à droite du porteur.

Le graphique en figure 3, illustre que sur les 10 porteurs presbytes envisagés, certains présentent une relative symétrie de rotation de la tête des 2 côtés du champ alors que pour d'autres, la différence d'implication de la tête dans le déplacement du regard vers la cible périphérique peut atteindre jusqu'à 60%.

Ainsi, il apparaît clairement qu'il peut exister une dissymétrie de coefficient « oeil/tête » pour un porteur.

Lors de la conception des surfaces de verres progressifs actuels, il est tenu compte au mieux d'un coefficient « oeil/tête » moyen, à savoir une moyenne entre le coefficient mesuré à gauche et à droite.

Ainsi, les surfaces des verres progressifs présentent généralement une forte symétrie autour de la méridienne principale.

Une surface ophtalmique progressive comprend une méridienne principale de progression divisant la surface en une partie nasale et une partie temporale et passant par au moins un point de contrôle $P_y$ d'ordonnée Y dans un repère centré un point de référence O(0 ;0).

Les surfaces progressives selon l'invention présentent une dissymétrie autour de la méridienne principale de progression.

Par exemple si le porteur présente une dissymétrie de coefficient oeil/tête en vision de loin, la surface ophtalmique progressive selon l'invention est conformée de sorte que les points situés à une ordonnée Y de part et d'autre du point de vision de loin respectent:

$$0,5 \geq \left| \frac{MaxgradCyl_{Ny1} - MaxgradCyl_{Ty1}}{MaxgradCyl_{Ny1} + MaxgradCyl_{Ty1}} \right| \geq 0,2$$

avec:

> MaxgradCyl$_{Ny1}$, la valeur absolue du gradient maximal de cylindre des points situés à ladite ordonnée Y dans la partie nasale de la surface et,
> MaxgradCyl$_{Ty1}$ la valeur absolue du gradient maximal de cylindre des points de la surface à ladite ordonnée Y dans la partie temporale de la surface.

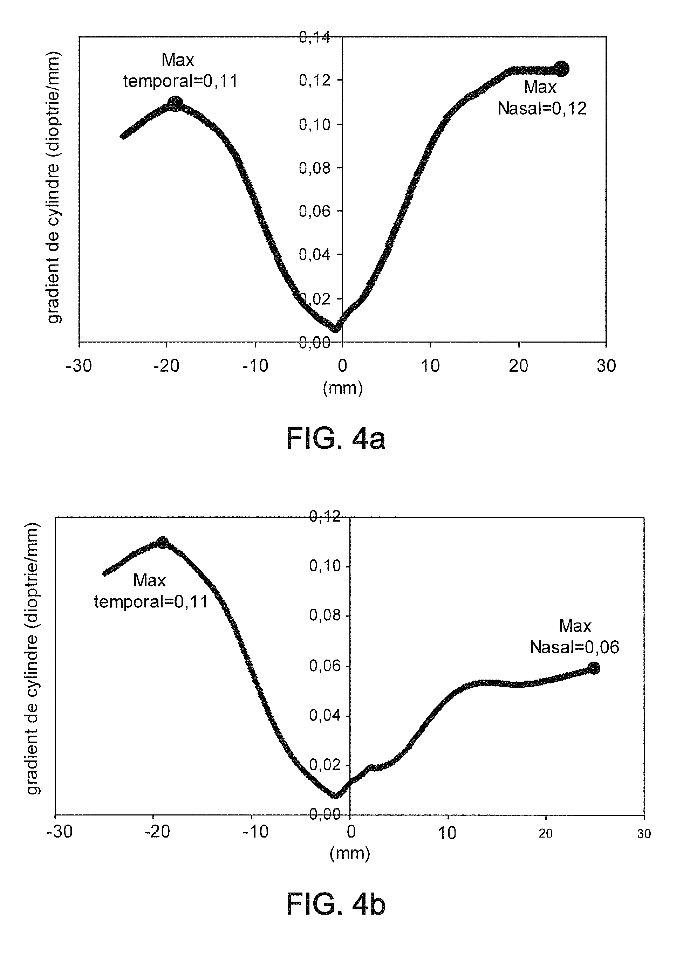

Les figures 4a et 4b représentent les valeurs de gradient de cylindre pour les points situés de part et d'autre du point de vision de loin pour un verre comportant une surface ophtalmique de l'art antérieur et un verre comportant une surface ophtalmique selon l'invention respectivement.

Comme illustré sur la figure 4a, le verre comportant la surface ophtalmique de l'art antérieur présente un profil symétrique de gradient de cylindre autour du point de vision de loin et pour les points situés à une ordonnée Y de part et d'autre du point de vision de loin:

$$0,07 \geq \left| \frac{MaxgradCyl_{Ny1} - MaxgradCyl_{Ty1}}{MaxgradCyl_{Ny1} + MaxgradCyl_{Ty1}} \right| \qquad .$$

Ainsi, les verres comportant les surfaces ophtalmiques de l'art antérieur sont mal adaptés aux porteurs qui présentent des coefficients « oeil/tête » dissymétriques.

Comme illustré sur la figure 4b, la surface ophtalmique progressive selon l'invention présente une dissymétrie dans la répartition du gradient de cylindre entre les parties nasale et temporale.

La surface illustrée sur la figure 4b présente pour les points situés à une ordonnée Y de part et d'autre du point de vision de loin un contraste de gradient de cylindre

$$\left| \frac{MaxgradCyl_{Ny1} - MaxgradCyl_{Ty1}}{MaxgradCyl_{Ny1} + MaxgradCyl_{Ty1}} \right|$$

égal à 0,30.

Ainsi la répartition de gradient de cylindre de part et d'autre du point de vision de loin est dissymétrique, permettant une adaptation plus rapide du porteur aux verres ophtalmiques et une satisfaction subjective accrue par rapport aux verres existants.

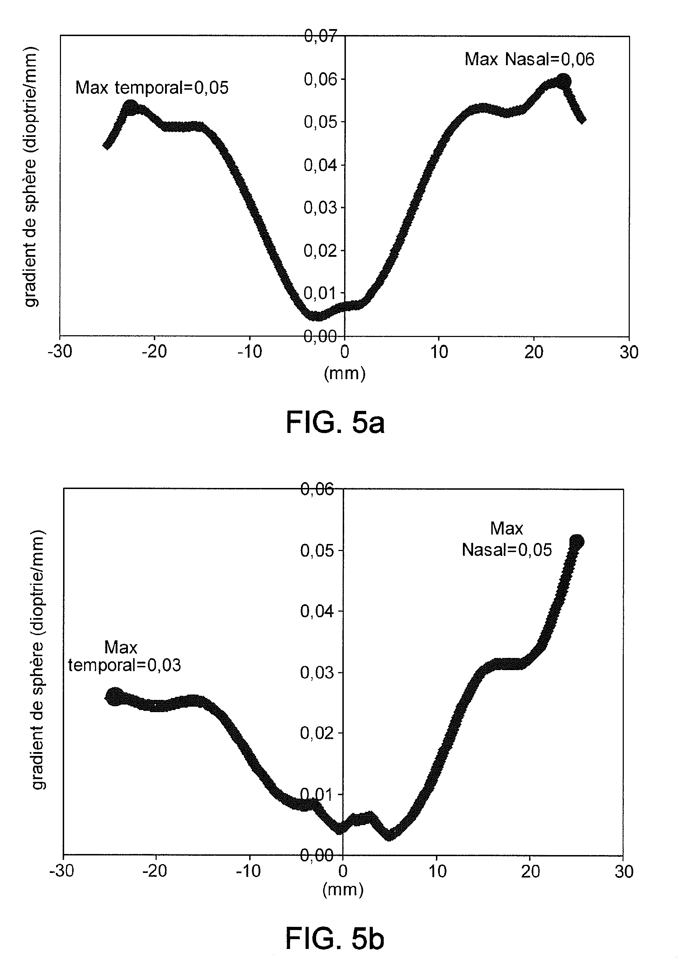

Les figures 5a et 5b représentent les valeurs de gradient de sphère pour les points situés de part et d'autre du point de vision de loin pour un verre comportant une surface ophtalmique de l'art antérieur et un verre comportant une surface ophtalmique selon l'invention respectivement.

Comme illustré sur la figure 5a, le verre comportant la surface ophtalmique de l'art antérieur présente un profil symétrique de gradient de sphère autour du point de vision de loin et pour les points situés à une ordonnée Y de part et d'autre du point de vision de loin:

$$0,06 \geq \left| \frac{MaxgradSph_{Ny1} - MaxgradSph_{Ty1}}{MaxgradSph_{Ny1} + MaxgradSph_{Ty1}} \right| \qquad .$$

Ainsi, les verres comportant les surfaces ophtalmiques de l'art antérieur sont mal adaptés aux porteurs qui présentent des coefficients « oeil/tête » dissymétriques.

Comme illustré sur la figure 5b, la surface ophtalmique progressive selon l'invention présente une dissymétrie dans la répartition du gradient de sphère entre les parties nasale et temporale.

La surface illustrée sur la figure 5b présente pour les points situés à une ordonnée Y de part et d'autre du point de vision de loin un contraste de gradient de sphère

$$\left| \frac{MaxgradSph_{Ny1} \quad - \quad MaxgradSph_{Ty1}}{MaxgradSph_{Ny1} \quad + \quad MaxgradSph_{Ty1}} \right|$$

égal à 0,33.

Ainsi la répartition de gradient de sphère de part et d'autre du point de vision de loin est dissymétrique, permettant une adaptation plus rapide du porteur aux verres ophtalmiques et une satisfaction subjective accrue par rapport aux verres existants.

L'invention se rapporte également à une paire de surfaces progressives comprenant une première surface destinée à un oeil droit d'un porteur et une seconde surface destinée à un oeil gauche d'un porteur. Les premières et deuxièmes surfaces étant selon l'invention et pour les points situés à une ordonnée Y de part et d'autre du point $P_Y$ de chacune des surfaces progressives :

$$\left| \frac{MaxgradCyl_{Ny1} \quad - \quad MaxgradCyl_{Ty2}}{MaxgradCyl_{Ny1} \quad + \quad MaxgradCyl_{Ty2}} \right| \quad \leq \quad 0,1$$

et,

$$\left| \frac{MaxgradCyl_{Ny2} \quad - \quad MaxgradCyl_{Ty1}}{MaxgradCyl_{Ny2} \quad + \quad MaxgradCyl_{Ty1}} \right| \quad \leq \quad 0,1$$

avec

- MaxgradCyl$_{Ny1}$, la valeur absolue du gradient maximal de cylindre des points situés à ladite ordonnée Y dans la partie nasale de la première surface,
- MaxgradCyl$_{Ty1}$ la valeur absolue du gradient maximal de cylindre des points situés à ladite ordonnée Y dans la partie temporale de la première surface,
- MaxgradCyl$_{Ny2}$ la valeur absolue du gradient maximal de cylindre des points situés à ladite ordonnée Y dans la partie nasale de la seconde surface et,
- MaxgradCyl$_{Ty2}$ la valeur absolue du gradient maximal de cylindre des points situés à ladite ordonnée Y dans la partie temporale de la seconde surface.

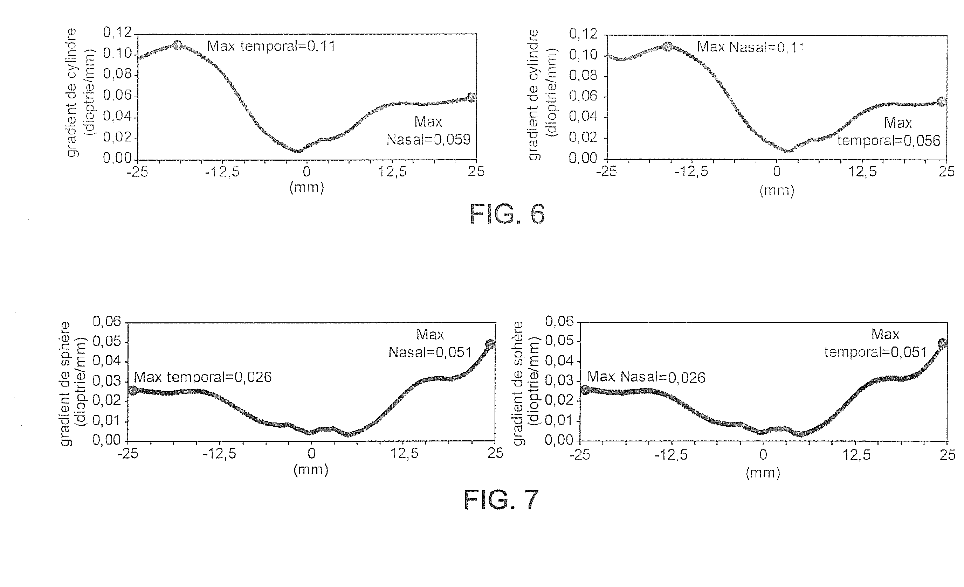

La figure 6 représente les valeurs de gradient de cylindre pour les points situés de part et d'autre du point de vision de loin pour une paire de surfaces ophtalmique selon l'invention respectivement.

Comme illustré sur la figure 6, la partie nasale de la première surface présente un maximum de gradient de cylindre proche du maximum de gradient de cylindre de la partie temporale de la deuxième surface et la partie temporale de la première surface présente un maximum de gradient de cylindre proche du maximum de gradient de cylindre de la partie nasale de la deuxième surface.

Selon un mode de réalisation de l'invention, la partie nasale de la première surface présente un maximum de gradient de sphère proche du maximum de gradient de sphère de la partie temporale de la deuxième surface et la partie temporale de la première surface présente un maximum de  gradient de cylindre proche du maximum de gradient de cylindre de la partie nasale de la deuxième surface.

Autrement dit, les points situés à une ordonnée Y de part et d'autre dudit point de vision de loin respectent:

$$\left| \frac{MaxgradSph_{Ny1} \quad - \quad MaxgradSph_{Ty2}}{MaxgradSph_{Ny1} \quad + \quad MaxgradSph_{Ty2}} \right| \quad \leq \quad 0,1$$

$$\left| \frac{MaxgradSph_{Ny2} - MaxgradSph_{Ty1}}{MaxgradSph_{Ny2} + MaxgradSph_{Ty1}} \right| \leq 0,1$$

avec

- MaxgradSph$_{Ny1}$, la valeur de absolue du gradient maximum de sphère des points situés à l'ordonnée Y dans la partie nasale de la première surface,
- MaxgradSph$_{Ty1}$, la valeur de absolue du gradient maximum de sphère des points situés à l'ordonnée Y dans la partie temporale de la première surface,
- MaxgradSph$_{Ny2}$ la valeur de absolue du gradient maximum de sphère des points situés à l'ordonnée Y dans la partie nasale de la second surface, et
- MaxgradSph$_{Ty2}$ la valeur de absolue du gradient maximum de sphère des points situés à l'ordonnée Y dans la partie temporale de la second surface.

La figure 7 représente les valeurs de gradient de sphère pour les points situés de part et d'autre du point de vision de loin pour une paire de verres comportant des surfaces ophtalmique selon l'invention respectivement.

Comme illustré sur la figure 7, la partie nasale de la première surface présente un maximum de gradient de sphère proche du maximum de gradient de sphère de la partie temporale de la deuxième surface et la partie temporale de la première surface présente un maximum de gradient de sphère proche du maximum de gradient de sphère de la partie nasale de la deuxième surface.

L'asymétrie du champ visuel peut également se manifester en vision de près.

Par exemple, une tâche de lecture peut introduire une asymétrie visuelle située à droite du lieu de fixation oculaire. Des travaux (voir Rayner et al., THE QUARTERLY JOURNAL OF EXPERIMENTAL PSYXHOLOGY 2009, 62 (8), 1457-1506) ont montré que l'empan perceptif, la capacité à intégrer un certain nombre de lettres, de mots en 1 seule fixation de quelques centaines de milliseconde, est asymétrique lors de la lecture et décalée vers le côté droit, pour les individus habitués à lire de gauche à droite. En effet, cette asymétrie fonctionnelle acquise permet d'anticiper la saccade antérograde de lecture et donc le point d'arrivée des yeux sur les prochains mots.

D'autres types de mesures peuvent être envisagés pour personnaliser la symétrie du champ visuel binoculaire. Ainsi il peut être intéressant de tenir compte d'une asymétrie du champ visuel dans le cas de porteurs atteints de glaucome et respecter alors les asymétries fréquentes d'évolution et de manifestation de cette pathologie sur chaque oeil ou encore un verre progressif spécifique pour les asymétries de champ attentionnels.

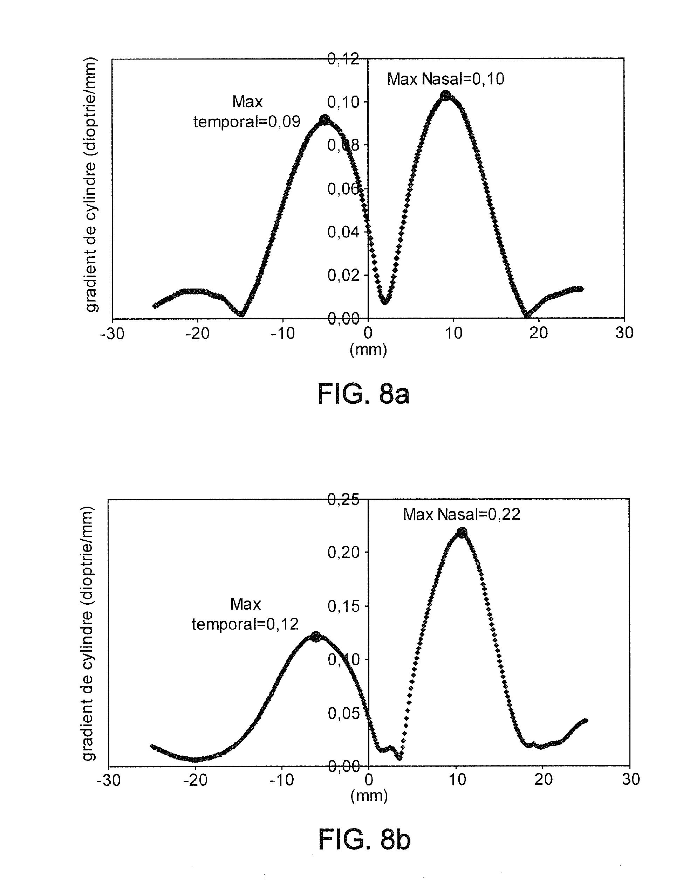

La figure 8a représente les valeurs des gradients de cylindre des points situés de part et d'autre du point de vision de près d'une surface d'un verre ophtalmique progressif selon l'art antérieur.

Comme illustré sur la figure 8a, les surfaces ophtalmiques progressives selon l'art antérieur présentent une forte symétrie dans la répartition du gradient de cylindre autour du point de vision de près.

En effet, les points situés à l'ordonnée Y de part et d'autre du point de vision de près respectent:

$$\left| \frac{MaxgradCyl_{Ny1} - MaxgradCyl_{Ty1}}{MaxgradCyl_{Ny1} + MaxgradCyl_{Ty1}} \right| = 0,056$$

avec:

Maxgradcyl$_{Ny1}$ la valeur absolue du gradient maximal de cylindre des points situés à ladite ordonnée Y dans la partie nasale de la surface et,
MaxgradCyl$_{Ty1}$ la valeur absolue du gradient maximal de cylindre des points situés à ladite ordonnée Y dans la partie temporale de la surface.

La figure 8 b illustre les valeurs des gradients de cylindre des points situés de part et d'autre du point de vision de près d'une surface d'un verre ophtalmique progressif selon un mode de réalisation de l'invention.

Ainsi, comme illustrée sur la figure 8b, une surface ophtalmique progressive selon ce mode de réalisation de l'invention présente une forte asymétrie dans la répartition des gradients de cylindre autour du point de vision de près.

En effet, dans l'exemple illustré sur la figure 8b, les points situés à l'ordonnée Y de part et d'autre du point de vision de près respectent:

$$\left| \frac{MaxgradCyl_{Ny1} - MaxgradCyl_{Ty1}}{MaxgradCyl_{Ny1} + MaxgradCyl_{Ty1}} \right| = 0,286 \; .$$

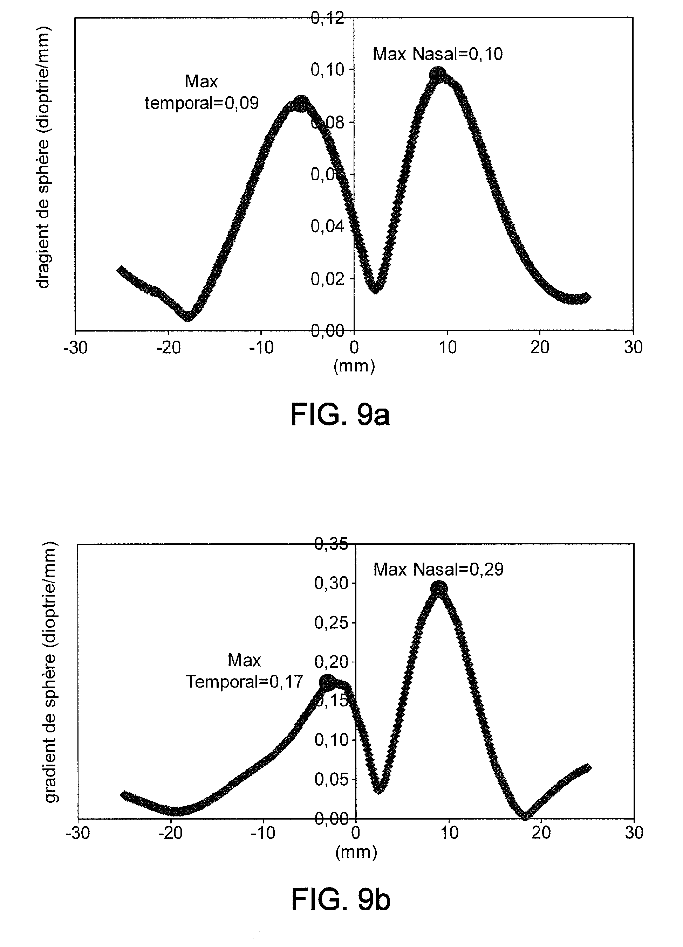

Les figures 9a et 9b représentent les valeurs de gradient de sphère pour les points situés de part et d'autre du point de vision de près pour un verre comportant une surface ophtalmique de l'art antérieur et un verre comportant une surface ophtalmique selon l'invention respectivement.

Comme illustré sur la figure 5a, le verre comportant la surface ophtalmique de l'art antérieur présente un profil symétrique de gradient de sphère autour du point de vision de près et pour les points situés à une ordonnée Y de part et d'autre du point de vision de près:

$$0,06 \geq \left| \frac{MaxgradSph_{Ny1} - MaxgradSph_{Ty1}}{MaxgradSph_{Ny1} + MaxgradSph_{Ty1}} \right| \; .$$

Ainsi, les verres comportant les surfaces ophtalmiques de l'art antérieur sont mal adaptés aux porteurs qui présentent un empan.

Comme illustré sur la figure 9b, la surface ophtalmique progressive selon l'invention présente une dissymétrie dans la répartition du gradient de sphère entre les parties nasale et temporale.

La surface illustrée sur la figure 9b présente pour les points situés à une ordonnée Y de part et d'autre du point de vision de près un contraste de gradient de sphère

$$\left| \frac{MaxgradSph_{Ny1} - MaxgradSph_{Ty1}}{MaxgradSph_{Ny1} + MaxgradSph_{Ty1}} \right|$$

égal à 0,261.

Selon un mode de réalisation préféré de l'invention, les points d'ordonnée Y sont compris à l'intérieur d'un disque de diamètre 50mm centré sur le point de référence O.

Selon un exemple de mode de réalisation de l'invention, les contrastes de gradients de sphère et de cylindre de la surface peuvent être déterminés en fonction de la différence de coefficient « oeil/tête » droit et gauche. Par exemple, il peut s'agir d'une fonction linéaire donnant un contraste de cylindre et de sphère de l'ordre de 0,5 dans un cas extrême de totale dissymétrie entre les coefficients « oeil/tête » droit et gauche.

Par exemple, les fonctions de contraste de cylindre et de sphère peuvent être :

$$\left| \frac{MaxgradCyl_{Ny1} - MaxgradCyl_{Ty1}}{MaxgradCyl_{Ny1} + MaxgradCyl_{Ty1}} \right| = \frac{G \times 0,5}{100}$$

et

$$\left| \frac{MaxgradSph_{Ny1} - MaxgradSph_{Ty1}}{MaxgradSph_{Ny1} + MaxgradSph_{Ty1}} \right| = \frac{G \times 0,5}{100}$$

avec G le pourcentage de différence de gain droit et gauche.

Dans un mode de réalisation utilisant l'empan comme paramètre de dissymétrie, par exemple en vision de près, l'homme du métier saura déterminer une fonction linéaire entre un empan minimum, par exemple nul, et un empan maximum.

Comme illustré sur la figure 10, la conception d'une paire de surfaces selon l'invention peut comprendre les étapes suivantes :

- une étape de fourniture de la prescription S1,
- une étape de fourniture des coefficients oeil-tête S2,
- une étape de détermination d'une paire de surfaces ophtalmiques progressives S3.

Au cours de l'étape de fourniture de la prescription S1, la prescription d'un porteur est fournie.

Au cours de l'étape de fourniture des coefficients oeil-tête S2, les coefficients oeil-tête droit et gauche du porteur sont fournis.

Au cours de l'étape de détermination d'une paire de surfaces ophtalmiques progressives S3, une paire de surfaces ophtalmiques progressives selon l'invention est déterminée en fonction de la prescription du porteur et les valeurs des contrastes de cylindre :

$$\left| \frac{MaxgradCyl_{Ny1} - MaxgradCyl_{Ty1}}{MaxgradCyl_{Ny1} + MaxgradCyl_{Ty1}} \right| \text{ et } \left| \frac{MaxgradCyl_{Ny2} - MaxgradCyl_{Ty2}}{MaxgradCyl_{Ny2} + MaxgradCyl_{Ty2}} \right|$$

avec

$MaxgradCyl_{Ny1}$, et $MaxgradCyl_{Ny2}$ la valeur absolue de gradient maximal de cylindre des points situés à ladite ordonnée Y dans la partie nasale de la première et seconde surface respectivement et,

$MaxgradCyl_{Ty1}$ et $MaxgradCyl_{Ty2}$ la valeur absolue du gradient maximal de cylindre des points situés à ladite ordonnée Y dans la partie temporale de la première et seconde surface respectivement.

Selon un mode de réalisation les contrastes de gradients de cylindre peuvent être déterminés, par exemple autour du point de vision de loin, au moyen des coefficients oeil-tête droit et gauche du porteur.

Selon un mode de réalisation de l'invention, les contrastes de gradients de cylindre peuvent être déterminés, par exemple autour du point de vision de près, au moyen de l'empan du porteur.

Une solution existante pour tenir compte du coefficient oeil/tête d'un porteur a été développée par la demanderesse. Cette solution consiste à proposer un verre adapté en fonction du coefficient de coordination oeil-tête mesuré, avec une surface ayant une réparation dite douce des gradients de sphère et de cylindre pour les porteurs ayant tendance à beaucoup bouger la tête et une répartition dite dure des gradients de sphère et de cylindre pour les porteurs ayant tendance à beaucoup bouger les yeux.

Lors de l'étape de détermination d'une paire de surfaces ophtalmiques progressives S3, il est possible de repartir de cette solution de l'art antérieur par exemple en séparant les zones en quadrants supposés indépendants.

En considérant un exemple caricatural, si un porteur présente un coefficient oeil-tête de 1 vers la droite, et un coefficient de O vers la gauche, signifiant qu'il ne tourne la tête vers la cible que lorsque celle-ci apparaît dans la partie droite du champ visuel, alors le verre progressif d'un tel individu devrait avoir une répartition des gradients de sphère et de cylindre de type dure dans l'hémi champ droit et de type douce dans l'autre hémi champ.

Il est entendu que l'invention peut être reproduite sous des formes différentes de celles des modes de réalisation qui ont été décrits en détail.

L'invention ne se limite pas aux modes de réalisation décrits et qui doivent être interprétés de façon non limitatives et englobant tous modes équivalents.

**Revendications**

1. Surface ophtalmique progressive comprenant une méridienne principale de progression divisant la surface en une partie nasale et une partie temporale et passant par au moins un point de contrôle Py d'ordonnée Y dans un repère centré en un point de référence O(0 ;0), **caractérisée en ce que** pour les points situés à une ordonnée Y de part et d'autre dudit point PY:

$$0,5 \geq \left| \frac{MaxgradCyl_{Ny1} - MaxgradCyl_{Ty1}}{MaxgradCyl_{Ny1} + MaxgradCyl_{Ty1}} \right| \geq 0,2$$

avec:

MaxgradCylNy1 la valeur absolue du gradient maximal de cylindre des points situés à ladite ordonnée Y dans la partie nasale de la surface et,
MaxgradCylTy1 la valeur absolue du gradient maximal de cylindre des points situés à ladite ordonnée Y dans la partie temporale de la surface.

2. Surface progressive selon la revendication 1, comprenant une zone de vision destinée à la vision de loin, ledit point de contrôle PY est un point de contrôle de la vision de loin.

3. Surface progressive selon l'une des revendications précédente comprenant une zone de vision destinée à la vision de près, ledit point de contrôle PY est un point de contrôle de la vision de près.

4. Surface progressive selon l'une des revendications précédentes pour laquelle pour les points situés à une ordonnée Y de part et d'autre dudit point PY:

$$0,5 \geq \left| \frac{MaxgradSph_{Ny1} - MaxgradSph_{Ty1}}{MaxgradSph_{Ny1} + MaxgradSph_{Ty1}} \right| \geq 0,2$$

avec:

MaxgradSphNy1 est la valeur absolue du gradient maximal de sphère des points situés à ladite ordonnée Y dans la partie nasale de la surface et,
MaxgradSphTy1 est la valeur absolue du gradient maximal de sphère des points situés à ladite ordonnée Y dans la partie temporale de la surface.

5. Surface progressive selon l'une des revendications précédentes pour laquelle les points d'ordonnée Y sont compris à l'intérieur d'un disque de diamètre 50 mm centré sur le point de référence O.

6. Paire de surfaces progressives comprenant une première surface destinée à un oeil droit d'un porteur et une seconde surface destinée à un oeil gauche d'un porteur, les premières et deuxièmes surfaces étant selon l'une des revendications 1 à 5 et pour les points situés à une ordonnée Y de part et d'autre du point PY de chacune des surfaces progressives :

$$\left| \frac{MaxgradCyl_{Ny1} - MaxgradCyl_{Ty2}}{MaxgradCyl_{Ny1} + MaxgradCyl_{Ty2}} \right| \leq 0,1$$

et,

$$\left| \frac{MaxgradCyl_{Ny2} - MaxgradCyl_{Ty1}}{MaxgradCyl_{Ny2} + MaxgradCyl_{Ty1}} \right| \leq 0,1$$

avec

MaxgradCylNy1 la valeur absolue du gradient maximal de cylindre des points situés à ladite ordonnée Y dans la partie nasale de la première surface,

MaxgradCylTy1 la valeur absolue du gradient maximal de cylindre des points situés à ladite ordonnée Y dans la partie temporale de la première surface,

MaxgradCylNy2 la valeur absolue du gradient maximal de cylindre des points situés à ladite ordonnée Y dans la partie nasale de la seconde surface et,

MaxgradCylTy2 la valeur absolue du gradient maximal de cylindre des points situés à ladite ordonnée Y dans la partie temporale de la seconde surface.

7. Paire de surfaces progressives selon la revendication 6, pour laquelle pour les points situés à une ordonnée Y de part et d'autre dudit point PY:

$$\left| \frac{MaxgradSph_{Ny1} - MaxgradSph_{Ty2}}{MaxgradSph_{Ny1} + MaxgradSph_{Ty2}} \right| \leq 0.1$$

$$\left| \frac{MaxgradSph_{Ny2} - MaxgradSph_{Ty1}}{MaxgradSph_{Ny2} + MaxgradSph_{Ty1}} \right| \leq 0.1$$

avec

MaxgradSphNy1 la valeur de absolue du gradient maximum de sphère des points situés à l'ordonnée Y dans la partie nasale de la première surface,

MaxgradSphTy1 la valeur de absolue du gradient maximum de sphère des points situés à l'ordonnée Y dans la partie temporale de la première surface,

MaxgradSphNy2 la valeur de absolue du gradient maximum de sphère des points situés à l'ordonnée Y dans la partie nasale de la second surface, et

MaxgradSphTy2 la valeur de absolue du gradient maximum de sphère des points situés à l'ordonnée Y dans la partie temporale de la second surface.

8. Procédé de détermination d'une paire de surfaces ophtalmiques progressives comprenant une première surface destinée à un oeil droit d'un porteur et une seconde surface destinée à un oeil gauche d'un porteur, le procédé comprenant :

- une étape de fourniture de la prescription, au cours de laquelle la prescription d'un porteur est fournie,
- une étape de fourniture des coefficients oeil-tête, au cours de la laquelle les coefficients oeil-tête droit et gauche du porteur sont fournis,
- une étape de détermination d'une paires de surfaces ophtalmiques progressives, au cours de laquelle une paire de surfaces ophtalmiques progressives selon l'une des revendications 6 ou 7 est déterminée en fonction de la prescription du porteur et les valeurs de

$$\left| \frac{MaxgradCyl_{Ny1} - MaxgradCyl_{Ty1}}{MaxgradCyl_{Ny1} + MaxgradCyl_{Ty1}} \right| \quad et \quad \left| \frac{MaxgradCyl_{Ny2} - MaxgradCyl_{Ty2}}{MaxgradCyl_{Ny2} + MaxgradCyl_{Ty2}} \right|$$

avec

MaxgradCylNy1 et MaxgradCylNy2 la valeur absolue de gradient maximal de cylindre des points situés à ladite ordonnée Y dans la partie nasale de la première et seconde surface respectivement et,

MaxgradCylTy1 et MaxgradCylTy2 la valeur absolue du gradient maximal de cylindre des points situés à ladite ordonnée Y dans la partie temporale de la première et seconde surface respectivement,

sont déterminées en fonction des coefficients oeil-tête droit et gauche du porteur.

**9.** Procédé de détermination d'une paire de surfaces ophtalmiques progressives comprenant une première surface destinée à un oeil droit d'un porteur et une seconde surface destinée à un oeil gauche d'un porteur, le procédé comprenant :

- une étape de fourniture de la prescription, au cours de laquelle la prescription d'un porteur est fournie,
- une étape de fourniture de l'empan, au cours de la laquelle l'empan perceptif du porteur est fourni,
- une étape de détermination d'une paires de surfaces ophtalmiques progressives, au cours de laquelle une paire de surfaces ophtalmiques progressives selon l'une des revendications 6 ou 7 est déterminée en fonction de la prescription du porteur et les valeurs de

$$\left|\frac{MaxgradCyl_{Ny1} - MaxgradCyl_{Ty1}}{MaxgradCyl_{Ny1} + MaxgradCyl_{Ty1}}\right| \quad et \quad \left|\frac{MaxgradCyl_{Ny2} - MaxgradCyl_{Ty2}}{MaxgradCyl_{Ny2} + MaxgradCyl_{Ty2}}\right|$$

avec
MaxgradcylNy1 et MaxgradCylNy2 la valeur absolue de gradient maximal de cylindre des points situés à ladite ordonnée Y dans la partie nasale de la première et seconde surface respectivement et,
MaxgradcylTy1 et MaxgradCylTy2 la valeur absolue du gradient maximal de cylindre des points situés à ladite ordonnée Y dans la partie temporale de la première et seconde surface respectivement,
sont déterminées en fonction de l'empan perceptif du porteur.

**10.** Procédé d'obtention d'un équipement ophtalmique comprenant une paire de lentilles progressives formant une lentille droite et une lentille gauche, le procédé comprenant l'utilisation de la paire de surfaces progressives selon la revendication 1 à 5 pour la détermination de la fonction optique d'une lentille droite cible ainsi que pour la détermination de la fonction optique d'une lentille gauche cible.

**11.** Equipement ophtalmique comprenant une paire de lentilles progressives obtenu selon la revendication 10.

FIG. 1

FIG. 2

FIG. 3

FIG. 10

FIG. 4a

FIG. 4b

FIG. 5a

FIG. 5b

FIG. 6

FIG. 7

FIG. 8a

FIG. 8b

FIG. 9a

FIG. 9b

Europäisches
Patentamt

European
Patent Office

Office européen
des brevets

**RAPPORT DE RECHERCHE EUROPEENNE**

Numéro de la demande

EP 12 30 5395

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2012/004783 A2 (A 2 VISION TECHNOLOGIES LTD [IL]; RYNDIN ANNA [IL]; LISICHKI ABRAHAM []) 12 janvier 2012 (2012-01-12) * figures 6,7 * * page 20, ligne 4-11,17-25 * ----- | 1-5,10, 11 | INV. G02C7/06 G02C7/02 |
| X | DE 42 42 267 A1 (RODENSTOCK OPTIK G [DE]) 16 juin 1994 (1994-06-16) * figure 1c * ----- | 1-5,10, 11 | |
| X | EP 0 724 179 A2 (SEIKO EPSON CORP [JP]) 31 juillet 1996 (1996-07-31) * figure 11 * ----- | 1-5,10, 11 | |
| X | EP 0 990 939 A1 (ESSILOR INT [FR]) 5 avril 2000 (2000-04-05) * figure 5 * ----- | 1-5,10, 11 | |
| X | WO 01/62139 A1 (SOLA INT HOLDINGS [AU]; FISHER SCOTT WARREN [AU]; BONNETT JOHN CHARLES) 30 août 2001 (2001-08-30) * figure 2 * * revendications 7-9 * ----- | 1-11 | DOMAINES TECHNIQUES RECHERCHES (IPC) G02C |

Le présent rapport a été établi pour toutes les revendications

| Lieu de la recherche | Date d'achèvement de la recherche | Examinateur |
|---|---|---|
| Munich | 7 août 2012 | de Lajarte, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 30 5395

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-08-2012

| Document brevet cité au rapport de recherche | | Date de publication | Membre(s) de la famille de brevet(s) | | | Date de publication |
|---|---|---|---|---|---|---|
| WO 2012004783 | A2 | 12-01-2012 | AUCUN | | | |
| DE 4242267 | A1 | 16-06-1994 | AT | 194227 | T | 15-07-2000 |
| | | | AU | 665703 | B2 | 11-01-1996 |
| | | | DE | 4242267 | A1 | 16-06-1994 |
| | | | DE | 59310067 | D1 | 03-08-2000 |
| | | | EP | 0626075 | A1 | 30-11-1994 |
| | | | ES | 2149255 | T3 | 01-11-2000 |
| | | | JP | H07504769 | A | 25-05-1995 |
| | | | WO | 9414100 | A1 | 23-06-1994 |
| EP 0724179 | A2 | 31-07-1996 | DE | 69532670 | D1 | 15-04-2004 |
| | | | DE | 69532670 | T2 | 03-03-2005 |
| | | | EP | 0724179 | A2 | 31-07-1996 |
| | | | JP | 3690427 | B2 | 31-08-2005 |
| | | | JP | 8234146 | A | 13-09-1996 |
| | | | US | 5745211 | A | 28-04-1998 |
| EP 0990939 | A1 | 05-04-2000 | AT | 384973 | T | 15-02-2008 |
| | | | DE | 69938027 | T2 | 29-01-2009 |
| | | | EP | 0990939 | A1 | 05-04-2000 |
| | | | ES | 2301232 | T3 | 16-06-2008 |
| | | | FR | 2783938 | A1 | 31-03-2000 |
| | | | JP | 4685999 | B2 | 18-05-2011 |
| | | | JP | 2000111846 | A | 21-04-2000 |
| | | | JP | 2009237548 | A | 15-10-2009 |
| | | | US | 6382789 | B1 | 07-05-2002 |
| WO 0162139 | A1 | 30-08-2001 | BR | 0108570 | A | 19-11-2002 |
| | | | CA | 2399247 | A1 | 30-08-2001 |
| | | | EP | 1261273 | A1 | 04-12-2002 |
| | | | JP | 2003523244 | A | 05-08-2003 |
| | | | MX | PA02008234 | A | 10-09-2004 |
| | | | US | 2003107707 | A1 | 12-06-2003 |
| | | | WO | 0162139 | A1 | 30-08-2001 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1591064 A

**Littérature non-brevet citée dans la description**

- **RAYNER et al.** *THE QUARTERLY JOURNAL OF EXPERIMENTAL PSYXHOLOGY,* 2009, vol. 62 (8), 1457-1506